# EUROPÄISCHE PATENTSCHRIFT

(11) **EP 2 575 436 B1**
(45) Veröffentlichungstag und Bekanntmachung des Hinweises auf die Patenterteilung: **29.04.2015**
(21) Anmeldenummer: 11727795.4
(22) Anmeldetag: 31.05.2011
(51) Int. Cl.: A01K 1/02

(54) **TRANSPORTBOX FÜR TIERE ODER GEGENSTÄNDE, INSBESONDERE ZUM EINBAU IN FAHRZEUGEN**
TRANSPORT BOX FOR ANIMALS OR OBJECTS, IN PARTICULAR FOR FITTING IN VEHICLES
BOÎTE DE TRANSPORT POUR ANIMAUX OU POUR OBJETS, PRÉVUE NOTAMMENT POUR ENCASTREMENT DANS DES VÉHICULES

(30) Priorität: 01.06.2010 DE 102010017184
(43) Veröffentlichungstag der Anmeldung: 10.04.2013
(73) Patentinhaber: STAHL AUTOMATISIERUNGSTECHNIK, vertreten durch INGO STAHL, 78253 Eigeltingen-Heudorf (DE); RS-Technik Cad-Cam GmbH, 78576 Emmingen-Liptingen (DE)
(72) Erfinder: STAHL, Ingo, 78253 Eigeltingen-Heudorf (DE); SCHAFHÄUTLE, Roland, 78253 Eigeltingen-Honstetten (DE)
(74) Vertreter: Heisel, Wolfgang
(86) Internationale Anmeldenummer: PCT/IB2011/052395
(87) Internationale Veröffentlichungsnummer: WO 2011/151788

(56) Entgegenhaltungen:
- WO-A1-2009/064191
- WO-A1-2009/139775
- AU-B1- 2009 222 624
- DE-A1- 3 805 981
- DE-A1- 4 228 949
- DE-A1- 19 915 639
- DE-U1- 9 106 186
- US-A1- 2004 139 923
- US-A1- 2006 037 554
- US-A1- 2008 066 687
- US-A1- 2008 121 188

## Beschreibung

### Technisches Gebiet

Die Erfindung betrifft eine Transportbox für Tiere oder Gegenstände zum festen Einbau in den Heckbereich eines Kraftfahrzeugs, die als solche einen im Wesentlichen kastenartigen Transportraum besitzt, der durch eine Bodenplatte, einer zu dieser beabstandeten Deckplatte und seitliche die Boden- und Deckplatte verbindende Begrenzungselemente gebildet wird, wobei mindestens ein Begrenzungselement für den Zugang zum Transportraum in seiner Lage veränderbar angeordnet ist.

### Stand der Technik

Transportboxen in der Form von verschliessbaren Käfigen oder Boxen für Tiere, wie Hunde, sind in einer grossen Vielfalt bekannt, um sie beispielsweise in einem Auto sicher mitnehmen oder sie zu einem Tierarzt transportieren zu können.

So ist beispielsweise in der DE 44 17 869 A1 eine so genannte Sicherheitseinrichtung für Tiere in Kraftfahrtzeugen beschrieben, die insbesondere für den Transport von grossen Hunden auf dem Rücksitz eines Kraftfahrzeuges eingesetzt werden soll, welche als eine zwischen Vorder- und Rücksitzlehne des Fahrzeugs einklemmbare, nach oben offene Sicherheitskiste ausgebildet ist.

Diese Sicherheitskiste besitzt eine Bodenplatte, an deren Seiten Wände vorgesehen sind, von denen die Vorder- und Rückwand jeweils übereinander parallel zur Bodenplatte geklappt werden können, wogegen die beiden anderen Stirnwände abnehmbar sind und im zusammengebauten Zustand über Spannverschlüsse gehalten werden.

Durch eine derartige Konstruktion ist es möglich, diese Kiste zu einem kompakt transportierbaren Paket zusammenzulegen, das dann beispielsweise in einem Kofferraum eines Kraftfahrzeugs verstaut werden kann.

Die auf dem Rücksitz eines Kraftfahrzeugs aufstellbare Sicherheitskiste kann zwar durch ihre teilweise klappbaren Einzelteile relativ rasch auf- und abgebaut werden, jedoch ist deren Platzierung auf dem Rücksitz eines Kraftfahrzeugs lediglich eine Notlösung, denn ein Hund kann jederzeit aus dieser Kiste herausspringen, da diese oben offen ist.

Sicherer sind dagegen Tierboxen, die beispielsweise im Heckbereich von so genannten "Cross-Over" Fahrzeugen, und zwar hinter den hinteren Sitzen fest installiert werden und eine geschlossene Bauart besitzen. Hierzu ist beispielsweise eine Hundetransportbox aus der DE 200 07 133 U1 bekannt, mit der neben lebenden Tieren auch Gegenstände transportiert werden sollen. Diese Transportvorrichtung hat darüber hinaus noch die Besonderheit, dass sie aus Sicherheitsgründen in Längsrichtung des Kraftfahrzeugs deformierbar und/oder ineinander verschiebbar ausgebildet ist, um bei möglichen Unfällen nachgeben zu können.

Bezüglich dieser im Heckteil eines Kraftfahrzeuges fest installierbaren Hundetransportbox, für die angegeben wurde, dass mit dieser neben lebenden Tieren auch Gegenstände transportiert werden können, ist zu bemerken, dass es sich hier um einen verschliessbaren Art Käfig handelt, der von der jeweiligen Abmessung her begrenzte Öffnungen hat, sodass die jeweilige Grösse von mitzunehmenden Gegenständen ebenfalls begrenzt ist; ganz abgesehen davon, dass die Käfigtüren hierzu erst betätigt werden müssen, bevor be- oder entladen werden kann.

Ferner ist aus der WO 2009/064191 A1 ein kastenartiger steifer Käfig für Tiere bekannt, der an einer Seite ein Begrenzungselement zum Öffnen und Verschliessen dieses Käfigs hat. In dieser Druckschrift ist ferner beschrieben, dass derartige nicht zusammenklappbare und für Hunde geeignete Käfige an einer Seite etwas abgeflacht sein können, sodass diese zum Beispiel in einem Kombi-Kraftfahrzeug untergebracht werden können.

Ansonsten ist eine Vielzahl von mittels eines Handgriffes zu transportierende sowie zusammenklapp- oder -faltbare Tierboxen oder Käfige in den unterschiedlichsten Formen bekannt. So ist zum Beispiel in der US 2008/0121188 A1 beziehungsweise der DE 38 05 981 A1 eine zusammenfaltbare Tierbox beziehungsweise ein zusammenlegbarer Container beschrieben. Hierbei kann der Transportraum durch ein Zusammenfalten beziehungsweise ein Zusammenklappen dadurch verkleinert werden, indem diese Behältnisse seitliche Begrenzungselemente besitzen, die jeweils zwei nach innen klappbare Bereiche aufweisen, sodass diese zu einer Bodenplatte des Behälters hin geklappt werden können, wobei sich dabei dessen Deckplatte mit absenkt und noch einen Freiraum freilässt, in dem dann zwei stirnseitige Begrenzungselemente untergebracht werden können. Daraus ergibt sich, dass diese Behälter im leeren Zustand für deren transportable Handhabung eng zusammengeklappt werden können. Ein ähnlich zusammenfaltbarer an einem Handgriff zu transportierender Tierkäfig ist auch aus der US 2004/0139923 A1 bekannt,

### Darstellung der Erfindung

Demgegenüber liegt der Erfindung die Aufgabe zugrunde, eine Transportbox zum festen Einbau im Heckbereich eines Kraftfahrzeuges zu schaffen, die sich wahlweise für den Transport von Tieren oder von Gegenständen gut eignet, wobei die Transportbox nicht nur einfach und sicher aufgebaut, sondern auch bei Nichtgebrauch als Tierkäfig so wenig wie möglich Platz einnehmen soll.

Diese Aufgabe wird erfindungsgemäss in einfacher Weise dadurch gelöst, dass eine Transportbox vorgesehen wird, bei der sämtliche Begrenzungselemente zwischen der Boden- und Deckplatte entweder teilweise oder vollständig derart veränderbar sind, dass dadurch wahlweise unterschiedlich grosse Freiräume für die Aufnahme von Tieren oder Gegenständen zu deren Transport entstehen. Hierbei können zumindest die als Vorder- und/oder Rückwand dienenden Begrenzungselemente ein- oder mehrteilig sowie klappbar ausgebildet sein, sodass diese beispielsweise in Richtung auf die Bodenplatte hin schwenk- oder drehbeweglich oder in Richtung auf die Deckplatte hin verschiebbeweglich sind. Ausgehend von der Grundkonzeption eines Art geschlossenen Käfigs für Tiere ist es aufgrund dieses Aufbaus vorteilhaft möglich, diesen Art Käfig rasch in einen brauchbaren Laderaum zu verwandeln, der vom Heck eines Fahrzeugs aus leicht zugänglich ist, und zwar ohne dass dieser vorher beispielsweise für einen Tiertransport verwendete Art Käfig extra dafür ausgebaut werden muss. Die durch die ab- beziehungsweise aufgeklappte Vorder- und/oder Rückwand erhaltene ebene Transportebene ist ein einfaches Einschieben beispielsweise von zum Transport bestimmter Getränkekästen möglich, und zwar ohne dass diese über eine Barriere innerhalb des "ehemaligen Käfigs" gehoben werden müssen; umgekehrt kann die Transportebene auch wieder rasch in einen "solchen Käfig" zurückgebaut werden.

Nach Massgabe der Erfindung ist es vorteilhaft, wenn der geschlossene Transportraum der erfindungsgemässen Transportbox insbesondere für den Transport von Tieren wie von Hunden dient. Ein derartiger Transportraum wird dabei durch die Bodenplatte, der aufgeklappten Vorder- und/oder Rückwand sowie beidseitig der Bodenplatte fest angeordneter Seitenwände, die mit einer starren Deckplatte verbunden sind, erreicht.

Hierbei ist es auch möglich, dass die Bodenplatte als durchgehende Platte und die Vorder- und/oder Rückwand, die Seitenwände sowie die Deckplatte jeweils als eine Gitterkonstruktion ausgebildet sind, und zwar damit die zu transportierenden Tiere zum einen auch etwas sehen und zum andern auch Luft bekommen können.

Die für einen Transport von Tieren hergerichtete Transportbox kann auch wieder leicht für den Transport von Gegenständen abgewandelt werden, indem jeweils die Vorder- und/oder Rückwand parallel zur Bodenplatte auf diese abgeklappt wird, sodass dadurch ein Transportraum mit einer Transportebene erhalten wird, der durch die auf die Bodenplatte jeweils abgeklappte Vorder- und/oder Rückwand sowie beidseitig der fest angeordneten Seitenwände und der diese verbindende starren Deckplatte begrenzt ist. Insgesamt ist die erfindungsgemässe Transportbox derart ausgebildet, dass diese im nicht benutzten Zustand einen geringen, zumindest aber einen kleineren Raum einnimmt als wenn sie als Tierbox dient.

Damit die durch das Umklappen der Vorder- und/oder Rückwand erhaltene Ladefläche praktisch als eine nahtlose ebene Transportebene erhalten wird, ist es vorteilhaft, wenn die in Schwenkrichtung gesehene jeweilige Breite der Vorder- und/oder Rückwand zusammen der Tiefe des Transportraums im Bereich der Bodenplatte entspricht, wodurch vor allem Gegenstände leichter in den Transportraum eingeschoben werden können ohne irgendwo hängen zu bleiben oder anzustossen. Dabei hat es sich bewährt, dass die jeweilige Breite der Vorder- und Rückwand gleich gross ausgebildet wird. Es ist aber auch möglich, die Vorder- und Rückwand unterschiedlich auszubilden, um beispielsweise eine Anpassung an den zur Verfügung stehenden Freiraum zu erhalten,

Wichtig ist, die Tiefe des Transportraums im Bereich der Deckplatte geringer als im Bereich der Bodenplatte auszubilden, wodurch dann die Stirnflächen der Seitenwände, die zur Vorderwand gerichtet sind, von der Deckplatte zur Bodenplatte hin schräg verlaufen. Damit kann erreicht werden, dass sich diese Partie der Transportbox besser an die meist ebenfalls schräg verlaufende Heckklappe eines Kraftfahrzeugs anpasst.

Umgekehrt kann es zweckmässig sein, die Seitenwände im Bereich der Rückwand stirnseitig jeweils in einem rechten oder leicht spitzen Winkel zur Bodenplatte auszubilden, denn meistens sind die hinteren Sitze eines Kraftfahrzeugs ebenfalls in einem leicht spitzen Winkel nach hinten geneigt angeordnet, um den mitfahrenden Personen ein bequemeres Sitzen zu ermöglichen.

Gegenüber dieser Grundkonzeption ist es auch möglich, dass als eine erste Variante die Seitenwände jeweils aus zwei Teilen gleicher Breite bestehen, deren benachbarten Schnittkanten und deren eine Aussenkante mit einer Leiste der Bodenplatte sowie deren andere Aussenkante mit der Deckplatte derart gelenkig miteinander verbunden sind, dass die Transportbox ziehharmonikaartig zu einem flachen Stapel zur Bodenplatte hin zusammenklappbar ist. Dadurch bleibt von der Transportbox lediglich ein flacher Stapel übrig, sodass somit für die zu transportierenden Gegenstände in kurzer Zeit ein Freiraum im Heck eines Fahrzeugs geschaffen werden kann. Darüber hinaus ist auch ein derart zusammengeklappter Stapel gewichtsmässig belastbar. Umgekehrt ist aus dem flachen Stapel wieder schnell eine Tierbox herstellbar, indem die Seitenwände sowie Vorder- und/oder Rückwand hochgeklappt werden.

Als eine zweite Variante ist es möglich, dass die Deckplatte aus zwei Teilen vorzugsweise gleicher Breite besteht, deren benachbarten Schnittkanten und deren jeweilige Aussenkante mit je einer Seitenwand derart gelenkig miteinander verbunden sind, wobei eine Seitenwand lösbar an der Bodenplatte angelenkt ist, dass die Transportbox ziehharmonikaartig zu einem flachen Stapel seitlich zu der feststehenden Seitenwand hin zusammenklappbar ist. Hier wird ebenfalls durch ein paar Handgriffe ein Freiraum unterschiedlicher Grösse im Vergleich zu der vorhergehenden Variante für die Aufnahme von Gegenständen geschaffen, bei dem lediglich ein schmaler seitlicher Stapel stehen bleibt.

Als eine dritte Variante ist es möglich, dass eine Seitenwand oben mit der Deckplatte und unten mit einer Leiste der Bodenplatte lösbar und die Deckplatte mit seiner davon abgewandten Seite mit der anderen feststehenden Seitenwand gelenkig derart miteinander verbunden sind, dass die lösbare Seitenwand zur Anlage an die feststehende Seitenwand schiebbar und die Deckplatte sodann auf diese klappbar ist. Auch hier wird in einfacher Weise ein Freiraum für die Aufnahme von Gegenständen geschaffen, bei dem lediglich ein schmaler seitlich stehender Stapel übrig bleibt.

Bei dem Grundkonzept sowie den genannten Varianten der erfindungsgemässen Transportbox ist es zweckmässig, diese zumindest teilweise als eine Gitterkonstruktion auszubilden, und zwar damit die zu transportierenden Tiere zum einen auch etwas sehen und zum anderen auch genügend Luft bekommen können, wobei die jeweilige Bodenplatte vorzugsweise als Platte zum Einsatz kommen sollte, damit die Tiere einen besseren Stand haben.

Schliesslich ist es zweckmässig, dass die schwenkbeweglichen Teile der Transportbox über Scharniere wie Klavierbänder oder dergleichen miteinander verbunden werden. Alternativ kann es auch vorgesehen sein, die Bodenplatte als integrativer. Bestandteil eines Bodens eines Fahrzeugs, beispielsweise eines Kofferraumbodens, auszubilden.

Auch ist es möglich, dass die zusammengeklappte Transportbox mit dem Kofferraumboden des Kraftfahrzeugs in vorteilhafter Weise eine Ebene bildet.

### Zeichnungen

Weitere Einzelheiten und Vorteile der Erfindung werden nachfolgend anhand mehrerer Ausführungsbeispiele unter Bezug auf die Zeichnung näher beschrieben.

Es zeigen:
- Fig. 1: eine perspektivische Darstellung des prinzipiellen Aufbaus einer ersten Variante einer erfindungsgemässen Transportbox im geschlossenen Zustand, die insbesondere für einen Transport von Tieren geeignet ist;
- Fig. 2: die Transportbox gemäss Fig. 1 mit einer abgeklappten Vorderwand;
- Fig. 3: die Transportbox gemäss Fig. 1 mit einer abgeklappten Vorder- und Rückwand als Transportebene;
- Fig. 4: eine erste Variante einer Transportbox, bei der in Abweichung zu dem Grundkonzept gemäss Fig. 3 die Seitenwände knickbar ausgebildet sind;
- Fig. 5: die Transportbox gemäss Fig. 4 in einem Zustand, indem gerade die Seitenwände mit der Deckplatte ziehharmonikaartig zusammengeklappt werden;
- Fig. 6: die Transportbox gemäss Fig. 5 in einem zu einem flachen Stapel zusammengeklappten Zustand;
- Fig. 7: eine zweite Variante einer Transportbox, bei der in Abweichung zu dem Grundkonzept gemäss Fig. 3 die Deckplatte knickbar ausgebildet ist;
- Fig. 8: die Transportbox gemäss Fig. 7 in einem Zustand, indem gerade die Deckplatte mit einer Seitenwand ziehharmonikaartig zur feststehenden Seitenwand hin zusammengeklappt wird;
- Fig. 9: die Transportbox gemäss Fig. 8 in einem zu einem seitlichen flachen Stapel zusammengeklappten Zustand;
- Fig. 10: eine dritte Variante einer Transportbox, bei der in Abweichung zu dem Grundkonzept gemäss Fig. 3 gerade eine abgelöste Seitenwand zur feststehenden andern Seitenwand verschoben und die Deckplatte abgeklappt wird;
- Fig. 11: die Transportbox gemäss Fig. 10 mit aneinander geschobenen Seitenwänden;
- Fig. 12: die Transportbox gemäss Fig. 11 mit einem zu einem seitlichen Stapel abgeklappten Deckplatte;
- Fig. 13: eine weitere Variante einer Transportbox, in Abweichung zu dem Grundkonzept gemäss Fig. 1 jedoch mit geöffneter Vorderwand;
- Fig. 14: die Transportbox gemäss Fig. 13, jedoch mit aus dem Öffnungsbereich entfernter Vorderwand;
- Fig. 15: eine andere Variante der Transportbox gemäss Fig. 13, mit einer zweigeteilt ausgebildeten Vorderwand;
- Fig. 16: eine Darstellung der Transportbox gemäss Fig. 13 mit einer ersten Ausführungsvariante der Vorderwand;
- Fig. 17: eine Darstellung der Transportbox gemäss Fig. 13 mit einer weiteren Ausführungsvariante der Vorderwand;
- Fig. 18: eine Darstellung der Transportbox gemäss den Fig. 16 und 17 mit aus dem Öffnungsbereich entfernter Vorderwand.

### Beschreibung der Ausführungsbeispiele

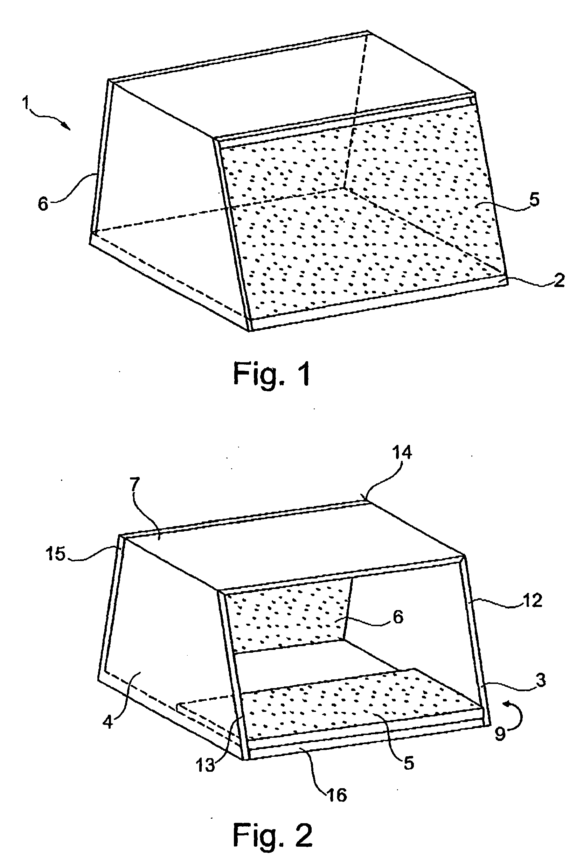

In den Fig. 1 - 3 ist in prinzipiellen Skizzen perspektivisch jeweils eine Transportbox 1 gezeigt, welche die Grundkonzeption der Erfindung darstellen. Diese Transportbox 1 umfasst eine Bodenplatte 2, beidseitig von dieser als Begrenzungselemente fest angeordnete Seitenwände 3 und 4 sowie eine klappbare Vorderwand 5 und eine klappbare Rückwand 6, während die Seitenwände 3 und 4 mit einer starren Deckplatte 7 miteinander verbunden sind.

Eine derart aufgebaute Transportbox 1, so wie sie in Fig. 1 in einem geschlossenen Zustand dargestellt ist, kann als Transportraum für den Transport beispielsweise eines Hundes dienen, wobei dann zweckmässigerweise entweder die Seitenwände 3 und 4, die Vorder- und Rückwand 5 und 6 sowie die Deckplatte 7 oder wahlweise einer dieser Elemente jeweils als eine Gitterkonstruktion ausgebildet sein können.

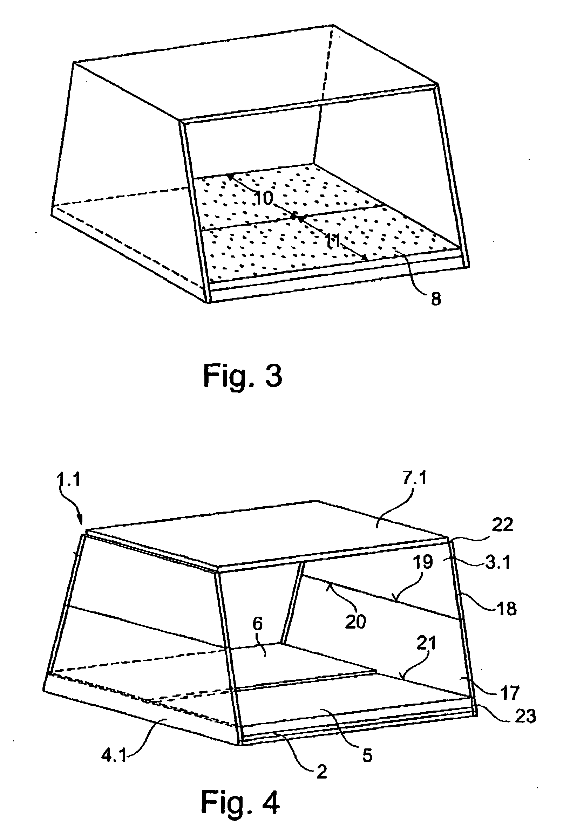

In Fig. 2 ist die Transportbox 1 mit einer in deren Innenraum vollständig auf die Bodenplatte 2 abgeklappten Vorderwand 5 zu sehen, welche dann eine parallele Lage zu dieser einnimmt, wobei in Fig. 3 noch die entsprechend abgeklappte Rückwand 6 hinzukommt, sodass dadurch eine Transportebene 8 entsteht, die von der Heckseite eines Fahrzeugs aus gut zugänglich ist.

Damit die Transportebene 8 als eine ebene Fläche vorliegt, ist die in Schwenkrichtung (Pfeil 9) gesehene jeweilige Breite 10 und 11 der Vorder- und Rückwand 5 und 6 derart gewählt, dass die beiden Breiten 10 und 11 zusammen der Tiefe des Transportraums im Bereich der Bodenplatte 2 entsprechen, das heisst, die jeweilige Breite 10 und 11 der Vorder- und Rückwand 5 und 6 gleich gross ist und die dann gleichzeitig der Höhe der Transportbox 1 entspricht.

Ferner ist die Tiefe des Transportraums der erfindungsgemässen Transportbox 1 im Bereich der Deckplatte 7 geringer ausgebildet als im Bereich der Bodenplatte 2, weswegen die mit 12 und 13 bezeichneten Stirnflächen der Seitenwände 3 und 4, die zur Vorderwand 5 gerichtet sind, von der Deckplatte 7 zur Bodenplatte 2 hin schräg verlaufen, sodass sich die Transportbox 1 gut an eine ebenfalls schräg verlaufende Heckklappe eines Fahrzeugs anpassen kann.

Gleichzeitig sind die mit 14 und 15 bezeichneten rückwärtigen Stirnflächen der Seitenwände 3 und 4 jeweils in einem geringen spitzen Winkel zur Bodenplatte 2 hin abgeschrägt, sodass sich die erfindungsgemässe Transportbox 1 auch im Bereich der Rücksitze eines Kraftfahrzeuges anpassen kann. Nicht zuletzt kann die Transportbox 1 in an sich bekannter Weise mittels nicht näher gezeigten Schrauben fest auf dem Boden des Ladebereichs eines Kraftfahrzeuges verankert werden oder sie kann über nicht näher gezeigten Befestigungsmitteln wie Riemen oder Gurte mit in dem Ladebereich eines Fahrzeugs oft vorhandenen Ösen verspannt werden. Alternativ können auch andere Spann- und/oder Haltebeziehungsweise Fixieralemente vorgesehen sein, die ein sicheres Befestigen der Transportbox 1 erlauben. Ferner kann die Vorderwand 5 verschliessbare Öffnungen aufweisen, um beispielsweise einen Hund in die geschlossene Transportbox 1 gemäss Fig. 1 zu bringen beziehungsweise einzusperren.

Schliesslich sind die Vorder- und/oder Rückwand 5 und 6 jeweils über ein Scharnier 16 in der Form eines Klavierbandes mit der Bodenplatte 2 verbunden, wobei die Vorder- und Rückwand 5 und 6 über nicht näher dargestellte und an sich bekannte Verriegelungen mit den Seitenwänden 3 und 4 und/oder dem Deckel 7 feststellbar sind.

Die Transportbox 1 als Grundkonzeption kann noch in folgende Varianten abgewandelt werden, wobei gleiche Teile auch gleiche beziehungsweise auf diese gleichen Teile zurückbezogene Bezugszeichen tragen.

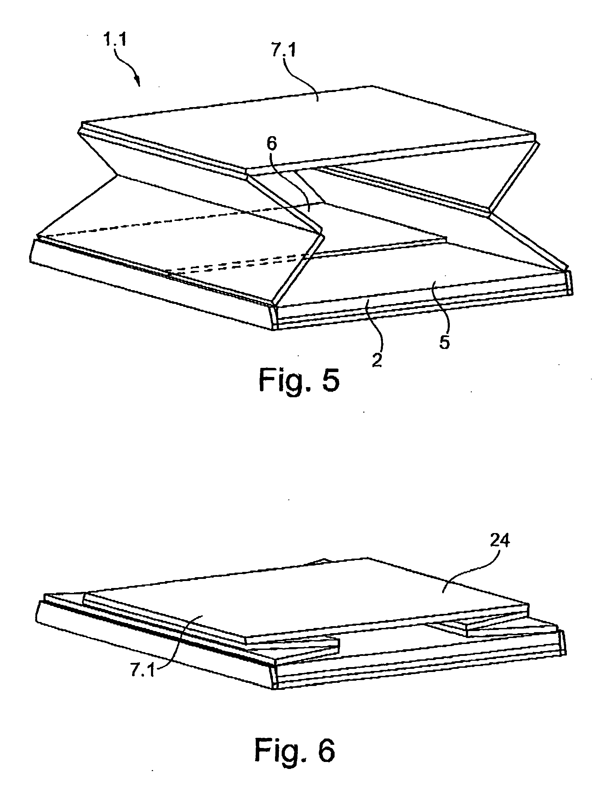

In den Fig. 4 - 6 ist als erste Variante eine Transportbox 1.1 gezeigt, deren Seitenwände 3.1 und 4.1 jeweils aus zwei Teilen 17 und 18 gleicher Breite bestehen, deren benachbarten, mit 19 und 20 bezeichneten Schnittkanten und deren jeweilige mit 21 beziehungsweise 22 bezeichneten Aussenkanten einerseits mit einer Leiste 23 der Bodenplatte 2 und andererseits mit einer Deckplatte 7.1 derart gelenkig miteinander verbunden sind, dass die Transportbox 1.1 ziehharmonikaartig (Fig, 5) zu einem flachen Stapel 24 (Fig. 6) zur Bodenplatte 2 hin zusammenklappbar ist.

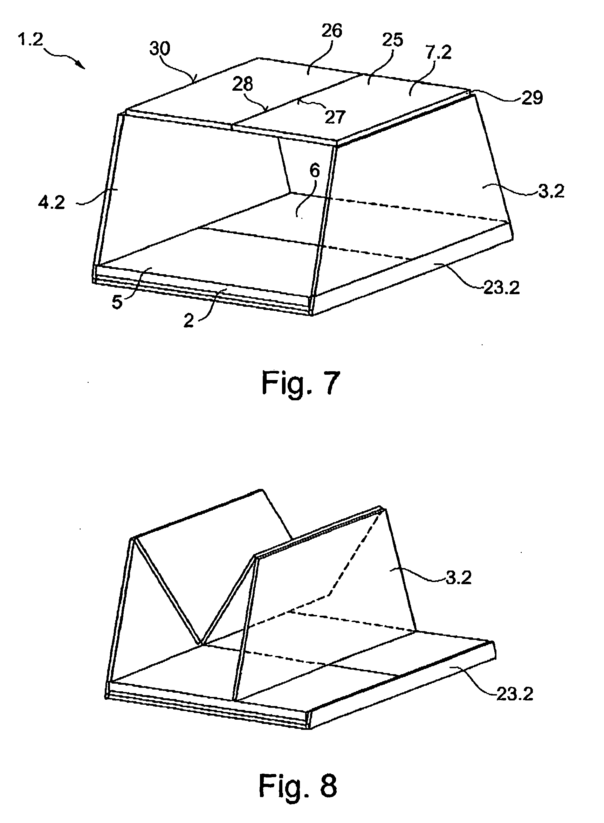

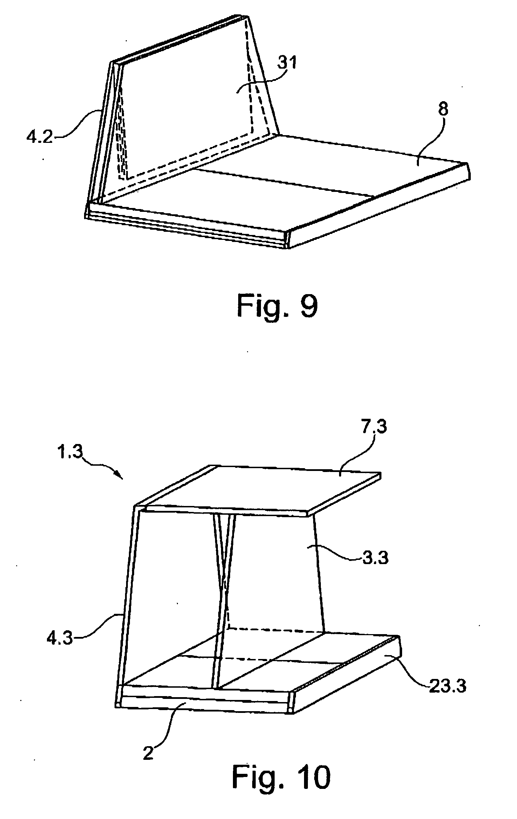

In den Fig. 7 - 9 ist als zweite Variante eine Transportbox 1.2 gezeigt, deren Deckplatte 7.2 aus zwei Teilen 25 und 26 gleicher Breite besteht, deren benachbarten mit 27 und 28 bezeichneten Schnittkanten und deren jeweilige mit 29 und 30 bezeichneten Aussenkanten einerseits mit der Seitenwand 3.2 und andererseits mit der Seitenwand 4.2 gelenkig miteinander verbunden sind, wobei dabei die Seitenwand 3.2 lösbar an einer Leiste 23.2 der Bodenplatte 2 angelenkt ist. Aufgrund einer derartigen Konstruktion der Transportbox 1.2 kann diese ebenfalls ziehharmonikaartig (Fig. 8) zu einem flachen Stapel 31 (Fig. 9) seitlich zu der feststehenden Seitenwand 4.2 hin zusammengeklappt werden.

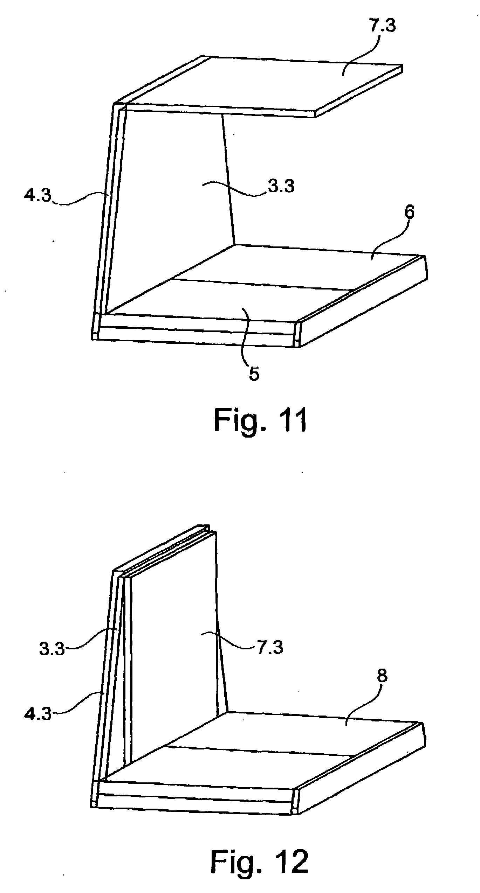

In den Fig. 10 - 12 ist als dritte Variante eine Transportbox 1.3 gezeigt, bei der die eine Seitenwand 3.3 oben lösbar mit der Deckplatte 7.3 und unten lösbar mit einer Leiste 23.3 der Bodenplatte 2 ausgebildet ist und die Deckplatte 7.3 mit seiner davon abgewandten Seite mit der anderen feststehenden Seitenwand 4.3 derart miteinander verbunden sind, dass die lösbare Seitenwand 3.3 zur Anlage an die feststehende Seitenwand 4.3 schiebbar (Fig. 11) und die Deckplatte 7.3 sodann auf diese klappbar ist (Fig. 12).

Insgesamt sind bei den Transportboxen 1.1 -1.3 die jeweiligen schwenkbeweglichen Teile über Scharniere 16 wie Klavierbänder oder dergleichen miteinander verbunden und diese können zumindest teilweise als eine Gitter- oder Parallelstabkonstruktion oder dergleichen ausgebildet sein.

Ausgehend von dem Umstand, dass zum Beispiel ein Hund mit einer der erfindungsgemässen Transportboxen 1, 1.1 - 1.3 transportiert werden soll, so sind an den Seitenwänden 3; 3.1 - 3.3; 4; 4.1 - 4.3 die Vorder- und/oder Rückwand 5, 6 jeweils in ihrer aufgeklappten Stellung an diesen zu fixieren, sodass jeweils eine geschlossene Box erhalten ist, in die dann ein Tier durch eine nicht näher dargestellte verschliessbare Öffnung gebracht werden kann. Für den Fall, dass anschliessend bestimmte Gegenstände, wie beispielsweise Wasser- oder Bierkästen transportiert werden sollen, genügt es, lediglich die Vorder- und/oder Rückwand 5, 6 der jeweiligen erfindungsgemässen Transportboxen 1, 1.1 - 1.3 von den Seitenwänden 3; 3.1 - 3.3; 4; 4.1 - 4.3 zu lösen und in deren Innenraum soweit zu klappen, bis diese auf der jeweiligen Bodenplatte 2 aufliegen. Im Falle der Transportbox 1 entsteht dadurch die ebene Transportebene 8, auf der dann bereits Gegenstände wie Kästen abgestellt werden können. Im Falle der Transportbox 1.1 als erste Variante wird der Freiraum zum Laden noch dadurch vergrössert, indem der Aufbau praktisch zusammengefaltet wird, das heisst, bis nur noch ein flacher Stapel 24 (Fig. 6) vorliegt, bei dem dann die Deckplatte 7 praktisch die Transportebene darstellt.

Dagegen bei der zweiten und dritten Variante, das heisst bei den Transportboxen 1.2 und 1.3 bleibt jeweils die Transportebene 8 erhalten, indem der übrige Aufbau beiseitegeschoben beziehungsweise geklappt wird.

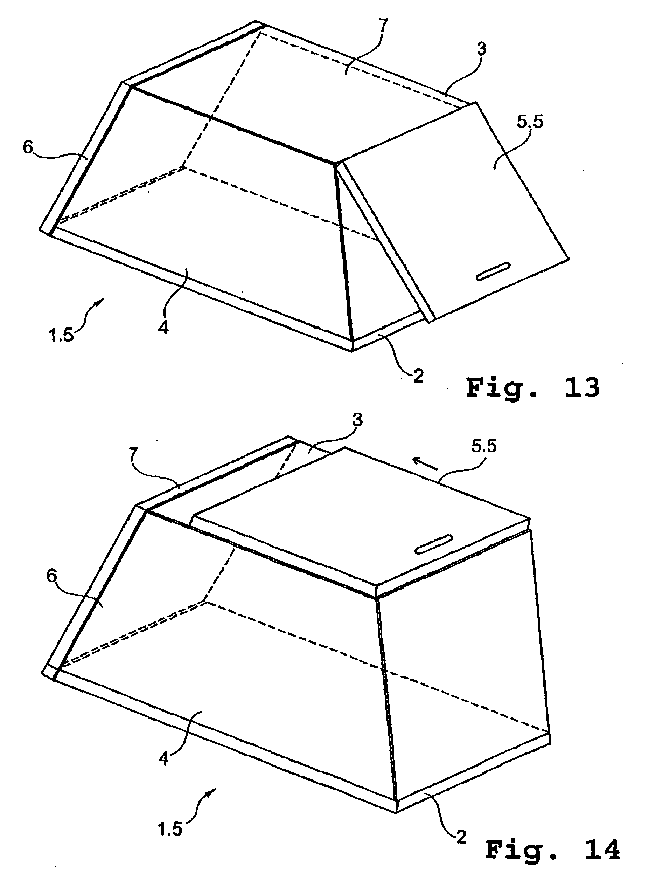

Schliesslich ist auch eine vereinfachte Grundausbildung einer Transportbox 1.5 (Fig. 13 und 14) möglich, und zwar kann diese als Transportraum für den Transport beispielsweise eines Hundes dienen, indem dann zweckmässigerweise entweder die Bodenplatte 2, die Seitenwände 3 und 4, die Vorder- und Rückwand 5 und 6 sowie die Deckplatte 7 oder wahlweise einer dieser Elemente jeweils als eine Gitterkonstruktion ausgebildet werden.

In Fig. 14 ist die Transportbox 1.5 mit einer vollständig auf die Deckplatte 7 geschobenen Vorderwand 5.5 zu sehen, welche dann eine parallele Lage zu dieser einnimmt. Es ist aber auch möglich, die Vorderwand 5.5 so auszubilden, dass sie vollständig in den Innenraum der Transportbox 1.5 geschoben werden kann. Dadurch ist der Öffnungsbereich frei zugänglich und die Transportbox 1.5 kann ebenfalls als Stauraum für den Kofferraum eines Fahrzeuges genutzt werden.

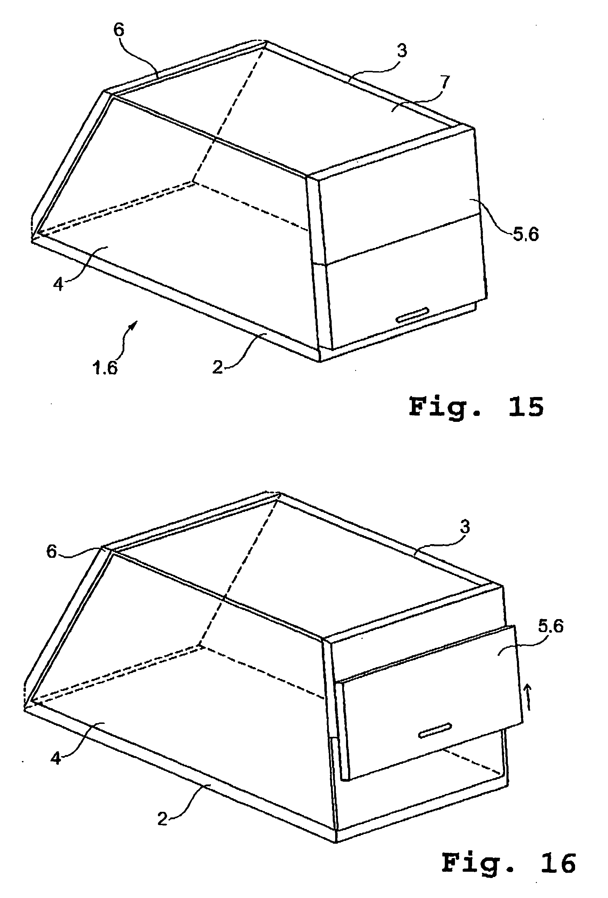

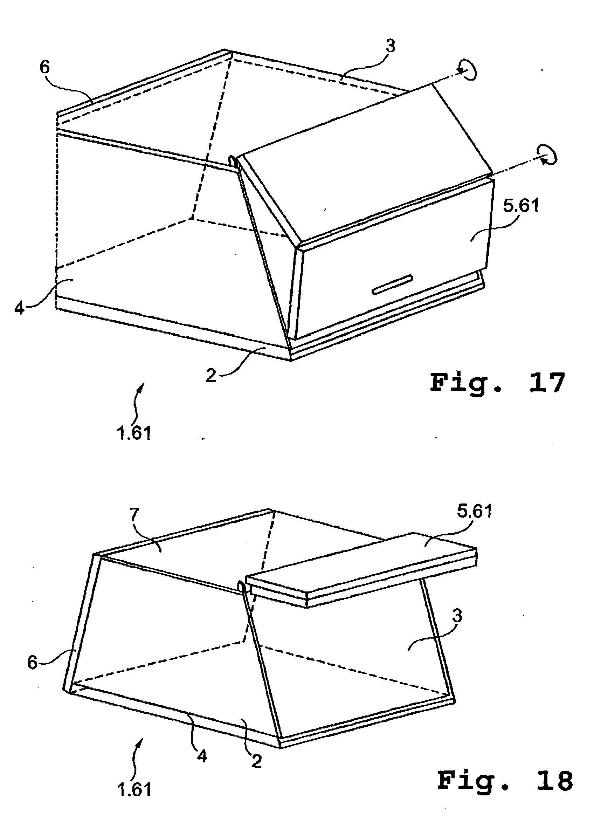

In den weiteren Fig. 15 - 18 sind weitere alternative Ausführungsformen der Vorderwand 5 dargestellt, um zu erreichen, dass diese zur Freigabe des Öffnungsbereichs einer Transportbox 1.6 beziehungsweise 1.61 vollständig aus dem Öffnungsbereich entfernt ist und auf der Deckplatte 7 zur Anlage gelangt.

In Fig. 15 und 16 ist eine Vorderwand 5.6 zweigeteilt ausgebildet, deren zwei Teile zur Öffnung zunächst aufeinander geschoben werden. Anschliessend wird dieser so gebildete Verbund auf die Deckplatte 7 verschwenkt, geklappt oder verschoben. In Fig, 17 ist eine zweigeteilte Vorderwand 5.61 gezeigt, deren zwei Teile zusammenklappbar ausgebildet sind und beispielsweise mit Magneten in Position gehalten werden können.

Insgesamt sind somit von einem Grundkonzept ausgehend jeweils leicht umrüstbare Transportboxen 1, 1.1 -1.3 sowie 1.5, 1.6 und 1.61, insbesondere für den Einbau in Kraftfahrzeugen, geschaffen worden, mit denen wahlweise sowohl Tiere als auch Gegenstände bequem und sicher mit einem Kraftfahrzeug transportiert werden können, ohne dass die jeweilige Transportbox 1, 1.1 - 1.3 sowie 1.5, 1.6 und 1.61 je nach Transportgut ein- und ausgebaut werden muss, das heisst, sind diese einmal in einem Fahrzeug installiert, dann brauchen sie lediglich nur noch durch einfache Handgriffe umgerüstet zu werden, um entweder ein Tier oder Gegenstände sicher transportieren zu können.

## Patentansprüche

1. Transportbox (1; 1.1 - 1.3; 1.5 - 1.61) für Tiere oder Gegenstände zum festen Einbau in den Heckbereich eines Kraftfahrzeugs, die als solche einen im Wesentlichen kastenartigen Transportraum besitzt, der durch eine Bodenplatte (2), einer zu dieser beabstandeten Deckplatte (7; 7.1 - 7.3) sowie seitliche die Bodenplatte (2) und Deckplatte (7; 7.1 - 7.3) verbindende Begrenzungselemente (3; 3.1 - 3.3; 4; 4.1 - 4.3; 5, 5.5, 5.6, 5.61; 6) gebildet wird, wobei mindestens ein Begrenzungselement (5, 5.5, 5.6, 5,61; 6) für den Zugang zu dem Transportraum in seiner Lage veränderbar angeordnet ist, **dadurch gekennzeichnet, dass** zusätzlich zu dem mindestens einen Begrenzungselement (5, 5.5, 5.6, 5.61; 6) für den Zugang zu dem Transportraum die übrigen Begrenzungselemente (3; 3.1 - 3.3; 4; 4.1 - 4.3) entweder teilweise oder vollständig derart veränderbar ausgebildet sind, dass dadurch eine Abwandlung der Transportbox, erhaltbar ist, die ein Umrüsten von einem geschlossenen Transportraum für Tiere wahlweise zu einem offenen Transportraum für Gegenstände - oder umgekehrt - ermöglicht, wobei diejenigen Begrenzungselemente (5, 5.5, 5.6, 5.61; 6), die eine Vorder- und/oder Rückwand darstellen, ein- oder mehrteilig und entweder in Richtung auf die Bodenplatte (2) oder auf die Deckplatte (7; 7.1 - 7.3) hin verschieb- oder schwenkbar oder drehbeweglich unabhängig von der Deckplatte (7; 7.1 - 7.3) oder der die seitlichen Seitenwände darstellenden Begrenzungselemente (3; 3.1 - 3.3; 4; 4.1 - 4.3) ausgebildet sind.

2. Transportbox (1) nach Anspruch 1, **dadurch gekennzeichnet, dass** die zu den Begrenzungselementen gehörende Vorder- und/oder Rückwand (5, 6) derart zur Bodenplatte (2) hin klappbar ausgebildet sind , dass diese mit ihrer Auflage auf die Bodenplatte (2) eine durchgehende zu der Bodenplatte (2) parallel verlaufende Transportebene (8) zum Einschieben der zu transportierenden Gegenstände bilden.

3. Transportbox (1) nach Anspruch 1 oder 2, **dadurch gekennzeichnet, dass** deren Transportraum, insbesondere in Abwandlung für Tiere, durch die Bodenplatte (2), den beidseitig an der Bodenplatte (2) angeordneten Seitenwänden (3, 4), die mit der Deckplatte (7) verbunden sind, sowie der aufgeklappten Vorder- und Rückwand (5, 6) begrenzt ist.

4. Transportbox (1) nach Anspruch 1 oder Anspruch 2, **dadurch gekennzeichnet, dass** deren Transportraum, in Abwandlung für Gegenstände, durch die auf die Bodenplatte (2) abgeklappten Vorder- und/oder Rückwand (5, 6) sowie den beidseitig der Bodenplatte (2) angeordneten Seitenwänden (3, 4) und der diese verbindenden Deckplatte (7) begrenzt ist.

5. Transportbox (1) nach einem der Ansprüche 1 - 4, **dadurch gekennzeichnet, dass** die in Schwenkrichtung (Pfeil 9) gesehene jeweilige Breite (10, 11) der Vorder- und/oder Rückwand (5, 6) zusammen der Tiefe des Transportraums im Bereich der Bodenplatte (2) entspricht.

6. Transportbox (1) nach Anspruch 5, **dadurch gekennzeichnet, dass** die jeweilige Breite (10, 11) der Vorder- und Rückwand (5, 6) gleich gross ist.

7. Transportbox (1) nach Anspruch 5 oder 6, **dadurch gekennzeichnet, dass** die Tiefe des Transportraums im Bereich der Deckplatte (7) derart geringer als im Bereich der Bodenplatte (2) ausgebildet ist, dass die Seitenwände (3, 4) zur Vorderwand (5) gerichtete Stirnflächen (12, 13) aufweisen, die von der Deckplatte (7) zur Bodenplatte (2) hin schräg verlaufen und mit dieser einen spitzen Winkel einschliessen.

8. Transportbox (1) nach einem der Ansprüche 2 bis 8, **dadurch gekennzeichnet, dass** die Seitenwände (3, 4) im Bereich der Rückwand (6) Stirnflächen (14, 15) aufweisen, die jeweils in einem rechten oder spitzen Winkel zur Bodenplatte (2) verlaufen.

9. Transportbox (1) nach einem der Ansprüche 1 bis 8, **dadurch gekennzeichnet, dass** die beidseitig der Bodenplatte (2) angeordneten Seitenwände (3, 4) mit dieser und mit der Deckplatte (7) fest verbunden sind.

10. Transportbox (1.1) nach einem der Ansprüche 1 bis 8, **dadurch gekennzeichnet, dass** die Seitenwände (3.1, 4.1) jeweils aus zwei Teilen (17, 18) gleicher Breite bestehen, von denen deren benachbarte Schnittkanten (19, 20) einerseits und deren eine Aussenkante (21) mit einer Leiste (23) der Bodenplatte (2) und deren andere Aussenkante (22) mit der Deckplatte (7) andererseits derart gelenkig miteinander verbunden sind, dass die Transportbox (1,1) ziehharmonikaartig zu einem flachen Stapel (24) zur Bodenplatte (2) hin zusammenklappbar ist.

11. Transportbox (1.2) nach einem der Ansprüche 1 bis 8, **dadurch gekennzeichnet, dass** die Deckplatte (7.2) aus zwei Teilen (25, 26) gleicher Breite besteht, deren benachbarten Schnittkanten (27, 28) einerseits und deren jeweilige Aussenkanten (29, 30) mit je einer Seitenwand (3.2, 4.2) andererseits derart gelenkig miteinander verbunden sind und die Seitenwand (3.2) lösbar an der Bodenplatte (2) angelenkt ist, dass die Transportbox (1.2) ziehharmonikaartig zu einem flachen Stapel (31) seitlich zu der feststehenden Seitenwand (4.2) hin zusammenklappbar ist.

12. Transportbox (1.3) nach einem der Ansprüche 1 bis 8, **dadurch gekennzeichnet, dass** die eine Seitenwand (3.3) oben mit der Deckplatte (7.3) und unten mit der Leiste (23.3) der Bodenplatte (2) lösbar ausgebildet ist und die Deckplatte (7.3) mit seiner davon abgewandten Seite gelenkig mit der anderen feststehenden Seitenwand (4.3) derart verbunden ist, dass die lösbare Seitenwand (3.3) zur Anlage an die feststehende Seitenwand (4.3) schiebbar und die Deckplatte (7.3) sodann auf diese klappbar ist.

13. Transportbox (1.5; 1.6; 1.61) nach mindestens einem der vorhergehenden Ansprüche, **dadurch gekennzeichnet, dass** eine ein- oder zweiteilige Vorderwand (5.5; 5.6; 5.61) zur Deckplatte (7) hin verschwenk- oder verschiebbar ist und flächig auf diesem vollständig zur Anlage gelangt.

14. Transportbox (1; 1.1 - 1.3; 1.5 - 1.61) nach einem der vorhergehenden Ansprüche, **dadurch gekennzeichnet, dass** diese zumindest teilweise als eine Gitter- und/oder Parallelstabkonstruktion oder dergleichen ausgebildet ist.

15. Transportbox (1; 1.1 - 1.3; 1.5 - 1.61)nach einem der vorhergehenden Ansprüche, **dadurch gekennzeichnet, dass** die schwenkbeweglichen Teile über Scharniere (16) miteinander verbunden sind.

## Claims

1. Transporting box (1; 1.1-1.3; 1.5-1.61) which is intended for transporting animals or objects and for being installed firmly in the rear region of a motor vehicle and, as such, has an essentially crate-like transporting chamber which is formed by a floor panel (2), by a cover panel (7; 7.1-7.3), which is spaced apart from the floor panel, and by lateral delimiting elements (3; 3.1-3.3; 4; 4.1-4.3; 5, 5.5, 5.6, 5.61; 6), which connect the floor panel (2) and the cover panel (7; 7.1-7.3), wherein at least one delimiting element (5, 5.5, 5.6, 5.61; 6) is arranged such that it can be altered in length for access to the transporting chamber, **characterized in that**, in addition to the at least one delimiting element (5, 5.5, 5.6, 5.61; 6) for access to the transporting chamber, the rest of the delimiting elements (3; 3.1-3.3; 4; 4.1-4.3) are designed to be alterable either in part or in full so as to achieve a modification of the transporting box which allows for conversion from a closed transporting chamber for animals optionally to an open transporting chamber for objects - or vice versa -, wherein those delimiting elements (5, 5.5, 5.6, 5.61; 6) which constitute a front wall and/or rear wall are designed in one or more parts and such that they can be displaced or pivoted or rotated in the direction of either the floor panel (2) or the cover panel (7; 7.1-7.3), independently of the cover panel (7; 7.1-7.3) or of the delimiting elements (3; 3.1-3.3; 4; 4.1-4.3) which constitute the lateral side walls.

2. Transporting box (1) according to Claim 1, **characterized in that** the front wall and/or rear wall (5, 6), belonging to the delimiting elements, are/is designed for swing action in the direction of the floor panel (2) such that, bearing on the floor panel (2), the front wall and/or rear wall form/forms a continuous transporting plane (8), which runs parallel to the floor panel (2) and on which it is possible to push in the objects which are to be transported.

3. Transporting box (1) according to Claim 1 or 2, **characterized in that** the transporting chamber thereof, in particular modified for animals, is delimited by the floor panel (2), by the side walls (3, 4), which are arranged on either side of the floor panel (2) and are connected to the cover panel (7), and by the swung-up front and rear walls (5, 6).

4. Transporting box (1) according to Claim 1 or Claim 2, **characterized in that** the transporting chamber thereof, modified for objects, is delimited by the front wall and/or rear wall (5, 6), swung down onto the floor panel (2), and by the side walls (3, 4), which are arranged on either side of the floor panel (2), and by the cover panel (7), which connects the side walls.

5. Transporting box (1) according to one of Claims 1-4, **characterized in that** the respective widths (10, 11) of the front wall and/or rear wall (5, 6), as seen in the pivoting direction (arrow 9), together correspond to the depth of the transporting chamber in the region of the floor panel (2).

6. Transporting box (1) according to Claim 5, **characterized in that** the respective widths (10, 11) of the front and rear walls (5, 6) are equal.

7. Transporting box (1) according to Claim 5 or 6, **characterized in that** the depth of the transporting chamber in the region of the cover panel (7) is designed to be smaller than in the region of the floor panel (2) such that the side walls (3, 4) have end surfaces (12, 13) which are directed towards the front wall (5), run obliquely from the cover panel (7) to the floor panel (2) and enclose an acute angle with the latter.

8. Transporting box (1) according to one of Claims 2 to 7, **characterized in that** the side walls (3, 4), in the region of the rear wall (6), have end surfaces (14, 15) which each run at right angles, or at an acute angle, to the floor panel (2).

9. Transporting box (1) according to one of Claims 1 to 8, **characterized in that** the side walls (3, 4), which are arranged on either side of the floor panel (2), are fixed to the latter and to the cover panel (7).

10. Transporting box (1.1) according to one of Claims 1 to 8, **characterized in that** the side walls (3.1, 4.1) each comprise two equal-width parts (17, 18), of which on the one hand the adjacent cut edges (19, 20) are connected to one another in an articulated manner, and on the other hand one outer edge (21) is connected in an articulated manner to a strip (23) of the floor panel (2) and the other outer edge (22) is connected in an articulated manner to the cover panel (7), such that the transporting box (1.1) can be collapsed in the direction of the floor panel (2), in the manner of an accordion, to form a flat stack (24).

11. Transporting box (1.2) according to one of Claims 1 to 8, **characterized in that** the cover panel (7.2) comprises two equal-width parts (25, 26), of which on the one hand the adjacent cut edges (27, 28) are connected to one another in an articulated manner and on the other hand the respective outer edges (29, 30) are each connected in an articulated manner to a side wall (3.2, 4.2), and the side wall (3.2) is articulated in a releasable manner on the floor panel (2), such that the transporting box (1.2) can be collapsed laterally in the direction of the fixed side wall (4.2), in the manner of an accordion, to form a flat stack (31).

12. Transporting box (1.3) according to one of Claims 1 to 8, **characterized in that** the one side wall (3.3) is of releasable design at the top in relation to the cover panel (7.3) and at the bottom in relation to the strip (23.3) of the floor panel (2), and the cover panel (7.3) is connected in an articulated manner, by way of its side remote from the side wall (3.3), to the other, fixed side wall (4.3) such that the releasable side wall (3.3) can be pushed into abutment against the fixed side wall (4.3) and the cover panel (7.3) can then be swung onto the same.

13. Transporting box (1.5; 1.6; 1.61) according to at least one of the preceding claims, **characterized in that** a single-part or two-part front wall (5.5; 5.6; 5.61) can be pivoted or displaced in the direction of the cover panel (7) and comes into full surface abutment against the same.

14. Transporting box (1; 1.1-1.3; 1.5-1.61) according to one of the preceding claims, **characterized in that** it is designed, at least in part, in the form of a lattice structure and/or parallel-bar structure or the like.

15. Transporting box (1; 1.1-1 .3; 1.5-1.61) according to one of the preceding claims, **characterized in that** the pivotable parts are connected to one another via hinges (16).

## Revendications

1. Boîte de transport (1 ; 1 .1 - 1.3 ; 1 .5 - 1.61) pour animaux ou objets destinée à être encastrée dans la région arrière d'un véhicule automobile, laquelle présente en tant que telle un espace de transport essentiellement de type caisse, lequel est formé par une plaque de base (2), une plaque de recouvrement (7 ; 7.1 - 7.3) espacée de celle-ci ainsi que des éléments de limitation latéraux (3 ; 3.1 - 3.3 ; 4 ; 4.1 - 4.3 ; 5, 5.5, 5.6, 5.61 ; 6) reliant la plaque de base (2) et la plaque de recouvrement (7 ; 7.1 - 7.3), la position d'au moins un élément de limitation (5, 5.5, 5.6, 5.61 ; 6) pour l'accès à l'espace de transport pouvant être modifiée, **caractérisée en ce qu'**en plus de l'au moins un élément de limitation (5, 5.5, 5.6, 5.61 ; 6) pour l'accès à l'espace de transport, le reste des éléments de limitation (3 ; 3.1 - 3.3 ; 4 ; 4.1 - 4.3) sont réalisés de manière modifiable soit partiellement soit complètement de telle sorte qu'une modification de la boîte de transport puisse ainsi être obtenue, laquelle permet une transformation d'un espace de transport fermé pour animaux, de manière sélective, à un espace de transport ouvert pour objets, ou inversement, ces éléments de limitation (5, 5.5, 5.6, 5.61 ; 6) qui constituent une paroi avant et/ou arrière étant réalisés en une ou plusieurs pièces et soit de manière coulissante ou pivotante en direction de la plaque de base (2) ou en direction de la plaque de recouvrement (7 ; 7.1 - 7.3) soit de manière mobile en rotation indépendamment de la plaque de recouvrement (7 ; 7.1 - 7.3) ou des éléments de limitation (3 ; 3.1 - 3.3 ; 4 ; 4.1 - 4.3) constituant les parois latérales.

2. Boîte de transport (1) selon la revendication 1, **caractérisée en ce que** les parois avant et/ou arrière (5, 6) appartenant aux éléments de limitation sont réalisées de manière rabattable en direction de la plaque de base (2) de telle sorte que celles-ci forment par leur appui sur la plaque de base (2) un plan de transport (8) continu s'étendant parallèlement à la plaque de base (2) pour l'insertion des objets à transporter.

3. Boîte de transport (1) selon la revendication 1 ou 2, **caractérisée en ce que** son espace de transport, en particulier dans la modification pour animaux, est limité par la plaque de base (2), par les parois latérales (3, 4) disposées des deux côtés sur la plaque de base (2), lesquelles sont reliées à la plaque de recouvrement (7), ainsi que par les parois avant et arrière (5, 6) ouvertes par pivotement.

4. Boîte de transport (1) selon la revendication 1 ou 2, **caractérisée en ce que** son espace de transport, dans la modification pour objets, est limité par les parois avant et/ou arrière (5, 6) rabattues sur la plaque de base (2), ainsi que par les parois latérales (3, 4) disposées des deux côtés de la plaque de base (2), et par la plaque de recouvrement (7) reliant celles-ci.

5. Boîte de transport (1) selon l'une quelconque des revendications 1 à 4, **caractérisée en ce que** la largeur respective (10, 11), vue dans le sens de pivotement (flèche 9), des parois avant et/ou arrière (5, 6) correspond conjointement à la profondeur de l'espace de transport dans la région de la plaque de base (2).

6. Boîte de transport (1) selon la revendication 5, **caractérisée en ce que** les largeurs respectives (10, 11) des parois avant et arrière (5, 6) sont égales.

7. Boîte de transport (1) selon la revendication 5 ou 6, **caractérisée en ce que** la profondeur de l'espace de transport dans la région de la plaque de recouvrement (7) est réalisée de manière plus petite que dans la région de la plaque de base (2), de telle sorte que les parois latérales (3, 4) présentent des surfaces frontales (12, 13) orientées vers la paroi avant (5), qui s'étendent de manière oblique à partir de la plaque de recouvrement (7) jusqu'à la plaque de base (2) et forment avec celle-ci un angle aigu.

8. Boîte de transport (1) selon l'une quelconque des revendications 2 à 7, **caractérisée en ce que** les parois latérales (3, 4) dans la région de la paroi arrière (6) présentent des surfaces frontales (14, 15) qui s'étendent respectivement suivant un angle droit ou aigu par rapport à la plaque de base (2).

9. Boîte de transport (1) selon l'une quelconque des revendications 1 à 8, **caractérisée en ce que** les parois latérales (3, 4) disposées des deux côtés de la plaque de base (2) sont reliées fixement à celle-ci et à la plaque de recouvrement (7).

10. Boîte de transport (1.1) selon l'une quelconque des revendications 1 à 8, **caractérisée en ce que** les parois latérales (3.1, 4.1) sont constituées respectivement de deux parties (17, 18) de même largeur, parmi lesquelles leurs arêtes de coupe adjacentes (19, 20) d'une part sont reliées de manière articulée l'une à l'autre et, d'autre part, l'une de leurs arêtes extérieures (21) est reliée de manière articulée à une baguette (23) de la plaque de base (2), et leur autre arête extérieure (22) est reliée de manière articulée à la plaque de recouvrement (7), de telle sorte que la boîte de transport (1.1) puisse être repliée à la manière d'un accordéon vers la plaque de base (2) pour former un empilement plat (24).

11. Boîte de transport (1.2) selon l'une quelconque des revendications 1 à 8, **caractérisée en ce que** la plaque de recouvrement (7.2) est constituée de deux parties (25, 26) de même largeur, dont les arêtes de coupe adjacentes (27, 28) d'une part sont reliées de manière articulée l'une à l'autre et dont les arêtes extérieures respectives (29, 30) d'autre part sont reliées de manière articulée à une paroi latérale respective (3.2, 4.2), et la paroi latérale (3.2) est articulée de manière libérable sur la plaque de base (2), de telle sorte que la boîte de transport (1.2) puisse être repliée à la manière d'un accordéon latéralement vers la paroi latérale fixe (4.2) pour former un empilement plat (31).

12. Boîte de transport (1.3) selon l'une quelconque des revendications 1 à 8, **caractérisée en ce que** l'une des parois latérales (3.3) est réalisée de manière à pouvoir être libérée, en haut, par rapport à la plaque de recouvrement (7.3) et, en bas, par rapport à la baguette (23.3) de la plaque de base (2), et la plaque de recouvrement (7.3) est reliée de manière articulée, par son côté opposé à celle-ci, à l'autre paroi latérale fixe (4.3), de telle sorte que la paroi latérale libérable (3.3) puisse être poussée en appui contre la paroi latérale fixe (4.3) et que la plaque de recouvrement (7.3) puisse ensuite être rabattue sur celle-ci.

13. Boîte de transport (1.5 ; 1.6 ; 1.61) selon au moins l'une quelconque des revendications précédentes, **caractérisée en ce qu'**une paroi avant (5.5 ; 5.6 ; 5.61) en une ou deux parties peut être pivotée ou coulissée en direction de la plaque de recouvrement (7) et vient complètement en appui à plat sur celle-ci.

14. Boîte de transport (1 ; 1 .1 - 1.3; 1 .5 - 1.61) selon l'une quelconque des revendications précédentes, **caractérisée en ce que** celle-ci est réalisée au moins partiellement sous forme de structures à grille et/ou à barres parallèles ou similaire.

15. Boîte de transport (1 ; 1 .1 - 1.3 ; 1 .5 - 1.61) selon l'une quelconque des revendications précédentes, **caractérisée en ce que** les parties mobiles en pivotement sont reliées les unes aux autres par le biais de charnières (16).
